# EUROPÄISCHE PATENTSCHRIFT

(11) **EP 3 645 596 B1**
(45) Veröffentlichungstag und Bekanntmachung des Hinweises auf die Patenterteilung: **10.08.2022**
(21) Anmeldenummer: 18733621.9
(22) Anmeldetag: 27.06.2018
(51) Int. Cl.: C08G 18/66, C08G 18/73, C08G 18/75, C08G 18/76, C08G 18/32, C08G 18/44, C08L 75/06, H01B 3/30

(54) **POLYURETHANE MIT GUTER DURCHLÄSSIGKEIT FÜR ELEKTROMAGNETISCHE STRAHLUNG**
POLYURETHANES WITH GOOD PERMEABILITY FOR ELECTROMAGNETIC RADIATION
POLYURÉTHANE AYANT UNE BONNE TRANSPARENCE POUR LE RAYONNEMENT ÉLECTROMAGNÉTIQUE

(30) Priorität: 27.06.2017 EP 17178008
(43) Veröffentlichungstag der Anmeldung: 06.05.2020
(73) Patentinhaber: BASF SE, 67056 Ludwigshafen am Rhein (DE)
(72) Erfinder: HENZE, Oliver Steffen, 49448 Lemfoerde (DE); UHLHORN, Frank, 49448 Lemfoerde (DE)
(74) Vertreter: BASF IP Association
(86) Internationale Anmeldenummer: PCT/EP2018/067215
(87) Internationale Veröffentlichungsnummer: WO 2019/002350

(56) Entgegenhaltungen:
- DE-A1-102012 218 848
- US-A1- 2017 002 199

## Beschreibung

Gegenstand der Erfindung ist Polyurethan das besonders geeignet ist in der Nähe oder in Geräten eingesetzt zu werden, die elektromagnetische Strahlen empfangen oder senden.

US 2017/002199A1 offenbart thermoplastische Polyurethane basierend auf Diisocyanaten und Polycarbonatpolyolen, sowie deren Verwendung zur Herstellung von Formkörpern und Kabelummantelungen.

DE 10 2012 218848 A1 betrifft thermoplastische Polyurethane aus Polycarbonatpolyolen sowie deren Verwendung zur Herstellung von Spritzgussartikel.

In und an elektronischen Geräten, die elektromagnetische Strahlen aussenden oder empfangen werden vielfach Kunststoffe verwendet. Teilweise werden wesentliche Teile des Gerätes selbst aus Kunststoff hergestellt oder das Gerät wird z.B. mit einem Schutz aus Kunststoff umgeben. Auch werden die Geräte häufig mit Anbauteilen, z. B. einer Haltevorrichtung versehen oder Gegenstände aus Kunststoff in unmittelbarer Nähe des Gerätes eingesetzt, z. B. Ständer, Ablagen, Abdeckungen und dergleichen. All diese Gegenstände absorbieren elektromagnetische Strahlung, was zu einer geringeren Leistung des Gerätes führt.

Diese Materialien müssen zudem ganz unterschiedlichen Anforderungsprofilen entsprechen, überwiegend aber hohen mechanischen Beanspruchung ganz unterschiedlicher Art gerecht werden.

Die Aufgabe der vorliegenden Erfindung bestand daher darin Kunststoffe speziell für Gegenstände bereitzustellen, die einerseits eine hohe mechanische Belastbarkeit haben mit ganz unterschiedlichem Anforderungsprofil wie beispielsweise Schlagzähigkeit bei niedrigen Temperaturen, eine hohe Elastizität, eine besondere Haptik und/oder eine hohe Weiterreißfestigkeit aufweisen und gleichzeitig die elektromagnetische Strahlung geringer abschwächen als bekannte Materialien.

Überraschenderweise wurde gefunden, dass thermoplastische Polyurethane auf der Basis von Polycarbonaten nicht nur dem vielfach unterschiedlichen mechanischen Anforderungsprofil für die genannten Gegenstände gerecht werden, sondern gleichzeitig auch elektromagnetische Strahlung deutlich weniger absorbieren, als dies bei den üblicherweise für diese Geräte verwendeten Kunststoffen der Fall ist.

Gegenstand der Erfindung ist daher ein Gegenstand aus thermoplastischem Polyurethan, der ein Bestandteil eines Gerätes ist oder der eine Hülle für ein Gerät ist, oder der in der Nähe eines Gerätes verwendet wird, wobei das Gerät elektromagnetische Strahlen empfängt oder sendet, und das thermoplastische Polyurethan hergestellt ist aus zumindest einem Isocyanat und mindestens einer mit Isocyanat reaktiven Substanz mit einem zahlenmittleren Molekulargewicht von mehr als 0,500 × 10³ g/mol, wobei die mit Isocyanat reaktive Substanz mindestens ein Polycarbonat mit mindestens zwei Hydroxylgruppen enthält, dadurch gekennzeichnet, dass die Frequenz der elektromagnetischen Strahlen zwischen10⁴ Hz und 10¹³ Hz liegt, bevorzugt zwischen 10⁵ Hz und 10¹¹ Hz und besonders bevorzugt zwischen 0,5 × 10⁹ Hz und 3,0 × 10⁹ Hz.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen thermoplastische Polyurethane, deren Granulate sowie expandierte Granulate. Expandierte Granulate sind kleine Schaumstoffkügelchen.

Vorzugsweise sind die erfindungsgemäßen Polyurethane Polyurethanschaumstoffe oder massive Polyurethane, die, abgesehen von den im Folgenden erläuterten Polyurethanbausteinen keine weiteren Polymere enthalten.

Die Polyurethane basieren auf den Komponenten (a) Isocyanat, (b) gegenüber Isocyanaten reaktive Verbindungen, auch als Polyol bezeichnet, und in bevorzugten Ausführungsformen (c) Kettenverlängerungsmittel, gegebenenfalls (e) Katalysatoren, sowie gegebenenfalls (d) Hilfs- und/oder Zusatzstoffe.

Die Komponenten (a) Isocyanat, (b) gegenüber Isocyanaten reaktive, Verbindungen auch als Polyol bezeichnet und (c) Kettenverlängerungsmittel werden einzeln oder zusammen auch als Aufbaukomponenten angesprochen. Die Aufbaukomponenten einschließlich des Katalysators und/oder der üblichen Hilfsstoffe und/oder Zusatzstoffe werden auch Einsatzstoffe genannt.

Die erfindungsgemäße Polyurethane werden erhalten indem man Polyisocyanate (a) gegenüber Isocyanaten reaktiven Verbindungen (b), gegebenenfalls mit Kettenverlängerer (c), gegebenenfalls Katalysatoren (d), und gegebenenfalls Treibmittel (e) und sonstigen Hilfs- und Zusatzstoffen (f) zu einer Reaktionsmischung vermischt und ausreagieren lässt.

In einer weiteren bevorzugten Ausführungsform ist das Polyurethan ein massives Polyurethan mit einer Dichte von vorzugsweise mehr als 0,85 × 10³ g/L, vorzugsweise 0,9 × 10³ g/L bis 1,4 × 10³ g/L und besonders bevorzugt 1,0 × 10³ g/L bis 1,3 × 10³ g/L. Dabei wird ein massives Polyurethan im Wesentlichen ohne Zugabe eines Treibmittels erhalten. Geringe Mengen an Treibmittel, beispielsweise Wasser, das herstellungsbedingt in den Polyolen enthalten ist, gelten dabei nicht als Treibmittel. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Die zur Herstellung der erfindungsgemäßen Polyurethane verwendeten Isocyanatkomponenten (a) umfassen alle zur Herstellung von Polyurethanen bekannten Isocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

In einer bevorzugten Ausführungsform ist das Isocyanat ausgewählt aus der Gruppe 4,4'-, 2,4'- und 2,2'-Dicyclohexylmethan-diisocyanat (H12 MDI), 1,6-Hexamethylen-diisocyanat (HDI),1,4-Cyclohexandiisocyanat, 1-Methyl-2,4- und/oder -2,6-cyclohexan-diisocyanat, 2,2'-, 2,4'- und/oder 4,4'-Diphenylmethandiisocyanat (MDI), 2,4- und/oder 2,6-Toluylendiisocyanat (TDI). Besonders bevorzugt ist das 4,4'-Diphenylmethandiisocyanat (MDI) und das Diisocyanat 1,6-Hexamethylen-diisocyanat (HDI). Das HDI ist wegen seiner guten UV-Stabilität in Verbindung mit hervorragenden mechanischen Eigenschaften bevorzugt.

Bei Anwendung bei denen es nicht auf Lichtstabilität ankommt, z.B. bei der Verwendung von lichtgeschützten Bauteilen, wie Rahmen von Geräten wird bevorzugt 2,2'-, 2,4'- und/oder 4,4'-Diphenylmethandiisocyanat (MDI) eingesetzt, da dies, die besseren mechanischen Eigenschaften hat.

Das H12 MDI ist das Isocyant das bevorzugt für transparente Polyurethene insbesondere für transpartente TPU eingesetzt wird.

In einer anderen bevorzugten Ausführungsform werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet.

Weitere mögliche Isocyanate sind beispielsweise im "Polyurethane Handbook Hanser Publisher, Munich 2nd edition 1993, chapter 3.2 and further chapters" angegeben.

Die Isocyanatkomponente (a) kann in Form von Isocyanatprepolymeren eingesetzt werden. Diese Isocyanatprepolymere sind erhältlich, indem vorstehend beschriebene Isocyanate (Bestandteil (a)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) und in eine bevorzugten Ausführungsform mit Kettenverlängerern (c) zum Isocyanatprepolymer umgesetzt werden.

Die gegenüber Isocyanat reaktive Verbindungen (b) mit einem zahlenmittleren Molekulargewicht von mehr als 500 g/mol und Kettenverlängerer (c) mit einem zahlenmittleren Molekulargewicht zwischen 50 g/mol und 499 g/mol sind dem Fachmann bekannt und beispielsweise beschrieben im "Kunststoffhandbuch, 7, Polyurethane", Carl Hanser-Verlag, 3. Auflage 1993, Kapitel 3.1.

Als gegenüber Isocyanaten reaktive Verbindungen (b) wird für mindestens ein Polycarbonatdiol eingesetzt, bevorzugt ein aliphatisches Polycarbonatdiol einem zahlenmittleren Molekulargewicht von mehr als 0,500 × 10³ g/mol. Bevorzugte Polycarbonatdiole sind Polycarbonatdiole, die auf Alkandiolen basieren. Besonders geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf Butandiol, Pentandiol oder Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole eingesetzt.

Vorzugsweise weisen die eingesetzten Polycarbonatdiole ein zahlenmittleres Molekulargewichte Mn im Bereich von 500 g/mol bis 4,0 × 10³ g/mol auf, bestimmt über GPC. Weiter bevorzugt ist das zahlenmittlere Molekulargewicht Mn der Polycarbonatidiol im Bereich von 0,65 × 10³ g/mol bis 3,5 × 10³ g/mol und besonders bevorzugt im Bereich von 0,8 × 10³ g/mol bis 3,0 × 10³ g/mol, bestimmt über GPC.

Bevorzugt handelt es sich bei dem Polycarbonatdiol um ein aliphatisches Polycarbonatdiol. In einer anderen bevorzugten Ausführungsform basiert das Polycarbonatiol auf Diolen, die ausgewählt sind aus der Gruppe Butandiol, Pentandiol oder Hexandiol.

Vorzugsweise weisen die eingesetzten Polycarbonatdiole ein zahlenmittleres Molekulargewichte Mn im Bereich von 500 g/mol bis 4,0 × 10³ g/mol, bestimmt über GPC, bevorzugt im Bereich von 0,65 × 10³ g/mol bis 3,5 × 10³ g/mol, besonders bevorzugt im Bereich von 0,8 × 10³ g/mol bis 3,0 × 10³ g/mol auf.

In der gegenüber Isocyanat reaktive Verbindung (b) können zudem weiter bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 500 g/mol bis 15 × 10³ g/mol.

In einer bevorzugten Ausführungsform besteht die mit Isocyanat reaktive Substanz zu mehr als 50 Gew.-% aus Polycarbonat mit mindestens zwei Hydroxylgruppen, weiter bevorzugt zu mehr als 75 Gew.-%, weiter bevorzugt mehr als 90 Gew.-%, noch weiter bevorzugt zu mehr als 95 Gew.-% und besonders bevorzugt zu mehr als 99 Gew.-%. Die Gew.-% beziehen sich dabei auf die gesamte mit Isocyanat reaktive Substanz mit einem zahlenmittleren Molekulargewicht von mehr als 0,500 × 10³ g/mol.

Wenn weitere gegenüber Isocyanat reaktive Substanze (c) verwendet werden, sind diese bevorzugt Polyether, da hierdurch eine geringere Anschmutzbarkeit der Gegenstände gegeben ist.

### Kettenverlängerer (c)

Für die Herstellung des Polyurethans wird eine weitere gegenüber Isocyanat reaktive Gruppen aufweisende aliphatische, araliphatische, aromatische oder cycloaliphatische Verbindung mit einem Molekulargewicht zwischen 50 g/mol und 499 g/mol verwendet, die auch als Kettenverlängerer (c) bezeichnet wird, wobei der Kettenverlängerer bevorzugt nur primäre Hydroxylguppen besitzt.

Als Kettenverlängerer oder Vernetzer (c) werden in bevorzugten Ausführungsformen Verbindungen mit mindestens zwei gegenüber Isocyanaten reaktiven Gruppen eingesetzt, die ein Molekulargewicht von weniger als 500 g/mol aufweisen, wobei Moleküle mit zwei gegenüber Isocyanat reaktiven Wasserstoffatomen auch als Kettenverlängerer und Moleküle mit mehr als zwei gegenüber Isocyanat reaktiven Gruppen auch als Vernetzer bezeichnet werden. Kettenverlängerer und/oder Vernetzungsmittel werden zur Modifizierung der mechanischen Eigenschaften, z.B. der Härte verwendet.

In einzelnen bevorzugten Ausführungsformen wird auf den Kettenverlängerer und/oder das Vernetzungsmittel verzichtet.

Werden Kettenverlängerer und/oder Vernetzungsmittel (c) eingesetzt, können die bei der Herstellung von Polyurethanen bekannten Kettenverlängerer und/oder Vernetzer eingesetzt werden. Dies sind vorzugsweise niedermolekulare Verbindungen, bevorzugt mit einem Molekularegewicht zwischen 50 g/mol und 499 g/mol mit gegenüber Isocyanaten reaktiven Gruppen, beispielsweise Glycerin, Trimethylolpropan, Glycol und Diamine. Weitere mögliche niedermolekulare Kettenverlängerungsmittel und/oder Vernetzungsmittel sind beispielsweise im Polyurethane Handbook Hanser Publisher, Munich 2nd edition 1993, chapter 3.4.3 angegeben.

Besonders bevorzugt sind die Kettenverlängerer 1,2-Ethandiol, 1, 3-Propandiol, 1,4-Butandiol, ganz besonders bevorzugt ist 1,4-Butandiol.

Weiter können Hilfsmittel und/oder Zusatzstoffe (f) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, , Keimbildungsmittel, Oxidationsstabilisatoren, Zellregler, Trennmittel, Gleit- und Entformungshilfen, Füllstoffe, Farbstoffe, Pigmente, Flammschutzmittel, gegebenenfalls Stabilisatoren, bevorzugt gegen Hydrolyse, Licht, Hitze oder Verfärbung, anorganische und/oder organische Füllstoffe, Verstärkungsmittel und/oder Weichmacher. fungistatische und bakteriostatisch wirkende Substanzen. Dabei werden die Hilfsmittel und/oder Zusatzstoffe so ausgewählt, dass sie für die elektromagnetischen Wellen in den genannten bevorzugten Bereichen gut durchlässig sind, d.h. bevorzugt keinen oder nur einen sehr geringen Dipolmoment aufweisen.

Solche Substanzen sind bekannt und beispielsweise im "Polyurethane Handbook Hanser Publisher, Munich 2nd edition 1993, chapter 3.4" angegeben Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, sterisch gehinderte Phenole, Hindered Amine Light Stabilizer, UV-Absorber, Hydrolyseschutzmittel, Quencher und Flammschutzmittel. Beispiele für kommerzielle Stabilisatoren sind gegeben in Plastics Additives Handbook, 5th Edition, H. Zweifel, ed., Hanser Publishers, München, 2001 ([1]), S.98-S.136.

In einer bevorzugten Ausführungsform weisen die UV-Absorber ein zahlenmittleres Molekulargewicht von größer als 0,3 × 10³ g/mol, insbesondere größer als 0,39 × 10³ g/mol, auf. Ferner sollten die bevorzugt verwendeten UV-Absorber ein Molekulargewicht von nicht größer als 5 ×x 10³ g/mol, besonders bevorzugt von nicht größer als 2 × 10³ g/mol aufweisen.

Besonders geeignet als UV-Absorber ist die Gruppe umfassend Cinnamate, Oxanilide und Benzotriazole, besonders bevorzugt sind Benzotriazole. Beispiele für besonders geeignete Benzotriazole sind Tinuvin^{®} 213, Tinuvin^{®} 234, Tinuvin^{®} 571, sowie Tinuvin^{®} 384 und das Eversorb^{®}82 .

Üblicherweise werden die UV-Absorber in Mengen von 0.01 Gew.-%, bis 5 Gew.-% bezogen auf die Gesamtmasse TPU zudosiert, bevorzugt 0,1 Gew.-% bis 2,0 Gew.-%, insbesondere 0,2 Gew.-% bis 0,5 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zusätzlich zu dem Antioxidans und dem UV-Absorber noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136.

Als Hindered Amine Light Stabilizer werden bevorzugt Hindered Amine Light Stabilizer genommen, bei denen das zahlenmittlere Molekulargewicht größer als 500 g/mol sind. Ferner sollte das Molekulargewicht der bevorzugten HALS-Verbindungen nicht größer als 10 × 10³ g/mol, besonders bevorzugt nicht größer als 5 ×10³ g/mol sein.

Besonders bevorzugte Hindered Amine Light Stabilizer sind bis-(1,2,2,6,6-penta-methylpiperidyl) sebacat (Tinuvin^{®} 765, Ciba Spezialitätenchemie AG) und das Kondensationsprodukt aus 1-Hydroxyethyl-2,2,6,6-tetramethyl-4-hydroxypiperidin und Bernsteinsäure (Tinuvin^{®} 622). Insbesondere bevorzugt ist das Kondensationsprodukt aus 1-Hydroxyethyl-2,2,6,6-tetramethyl-4-hydroxypiperidine and Bernsteinsäure (Tinuvin^{®} 622), wenn der Titangehalt des fertigen Produktes kleiner als 150 ppm, bevorzugt kleiner als 50 ppm, insbesondere kleiner als 10 ppm bezogen auf die eingesetzten Aufbaukomponenten ist.

HALS Verbinungen werden bevorzugt in einer Konzentration von 0,01 Gew.-% bis 5 Gew.-% eingesetzt, besonders bevorzugt von 0,1 Gew.-% bis 1 Gew.-%, insbesondere von 0,15 Gew.-% bis 0,3 Gew.-% bezogen auf das Gesamtgewicht des thermoplastischen Polurethanes bezogen auf die eingesetzten Aufbaukomponenten.

Eine besonders bevorzugte UV Stabilisierung enthält eine Mischung aus einem phenolischen Stabilisator, einem Benzotriazol und einer HALS-Verbindung in den oben beschriebenen bevorzugten Mengen.

In bevorzugten Ausführungsformen enthalten die erfindungsgemäßen Polyurethane Füllstoffe. Die chemische Natur und die Form des Füllstoffs kann in weiten Bereichen variieren, solange eine ausreichende Verträglichkeit mit dem Polyurethan gegeben ist und gleichzeitig die Durchlässigkeit für elektromagnetische Strahlen gewährleistet ist.

Geeignete Füllstoffe sind beispielsweise Glasfasern, Glaskugeln, Kohlenstoffasern, AramidFasern, Kaliumtitanat-Fasern, Fasern aus flüssig-kristallinen Polymeren, organische faserförmige Füllstoffe oder anorganische Verstärkungsmaterialien. Organische faserförmige Füllstoffe sind zum Beispiel Cellulosefasern, Hanffasern, Sisal oder Kenaf. Anorganische Verstärkungsmaterialien sind beispielsweise Keramikfüllstoffe, wie Aluminium- und Bornitrid, oder mineralische Füllstoffe, wie Asbest, Talkum, Wollastonit, Microvit, Silikate, Kreide, calcinierte Kaoline, Glimmer und Quarzmehl.

Bevorzugt sind im Rahmen der vorliegenden Erfindung faserförmige Füllstoffe. Die Fasern weisen bevorzugt einen Durchmesser von 3 µm bis 30 µm, bevorzugt 6 µm bis 20 µm und besonderes bevorzugt von 8 µm bis 15 µm auf. Die Faserlänge im Polyurethan beträgt in der Regel 20 µm bis 1000 µm, bevorzugt 180 µm bis 500 µm und besonderes bevorzugt 200 µm bis 400 µm.

Die faserförmigen Füllstoffe können zur besseren Verträglichkeit mit dem thermoplastischen Kunststoff mit einer Silanverbindung oberflächlich vorbehandelt sein.

Bevorzugt werden anorganische faserförmige Füllstoffe verwendet. Bei Verwendung von anorganischen faserförmigen Füllstoffen wird ein größerer Verstärkungseffekt des Polymers sowie eine höhere Wärmestandfestigkeit gefunden.

Besonders bevorzugte anorganische Fasern für die vorliegende Erfindung sind beschichtete Glasfasern, weiter bevorzugt aus E-Glas. E-Glas ist Borsilicatglas für erhöhte elektrische Anforderungen, siehe hierzu auch "Glass Fibers, Frederick T. Wallenberger, James C. Watson, and Hong Li, PPG Industries, Inc.; ASM Handbook, Vol. 21: Composites" Die Glasfasern, bevorzugt aus E-Glas haben weiter bevorzugt eine Stärke von 3 µm bis 30 µm, insbesondere 8 µm bis 15 µm, sowie weiter bevorzugt mit einem Maximum der Faserlängenverteilung im Bereich von 0,03 mm bis etwa 15 mm, insbesondere von 1 mm bis 10 mm, die nach dem Stand der Technik hergestellt werden.

Erfindungsgemäß kann das Polyurethan auch 2 oder mehr Füllstoffe enthalten.

Der Anteil des Füllstoffs in dem Polyurethan liegt vorzugsweise im Bereich von 10 Gew.-% bis 50 Gew.-% bezogen auf das eingesetzte Polyurethan, weiter bevorzugt im Bereich von 20 Gew.-% bis 45 Gew.-%, besonders bevorzugt im Bereich von 25 Gew.-% bis 40 Gew.-%.

Nähere Angaben über die oben genannten Hilfsmittel- und Zusatzstoffe sind der Fachliteratur zu entnehmen, z.B. aus Plastics Additives Handbook, 5th edition, H. Zweifel, ed., Hanser Publishers, München, 2001.

### Herstellung

Im Allgemeinen werden bei der Herstellung des erfindungsgemäßen Polyurethans die Polyisocyanate (a), die Polyole (b), Kettenverlängerer und/oder Vernetzungsmittel (c), gegebenenfalls. Katalysator (d), und, falls eingesetzt, die Treibmittel (e) und gegebenenfalls Hilfs- und/oder Zusatzstoffe (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d), (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d), (e) und (f) von 1,5 bis 20:1, vorzugsweise 1,5 bis 8:1 verwendet. Ein Verhältnis von 1:1 entspricht dabei einem Isocyanatindex von 100.

### Kettenverlängerer (c)

Katalysatoren d) beschleunigen die Reaktion der Polyole (b) und gegebenenfalls Kettenverlängerungs- und Vernetzungsmittel sowie chemischem Treibmittel mit den organischen, gegebenenfalls modifizierten Polyisocyanaten (a).

Bevorzugt werden weiterhin Katalysatoren (d) zur Herstellung der Polyurethane eingesetzt. Bevorzugt sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, 1,8-Diaza-byciclo-(5,4,0)-undec-7-en und vorzugsweise 1,4-Diaza-bicyclo-(2,2,2)-octan. Eine andere ebenfalls bevorzugter Gruppe von Katalysatoren (d) sind organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, Titansäureester, sowie Bismutcarboxylate, wie Bismut(III)-neodecanoat, Bismut-2-ethylhexanoat und Bismut-octanoat oder Mischungen davon. Die organischen Metallverbindungen werden alleine oder vorzugsweise in Kombination mit stark basischen Aminen eingesetzt.

Handelt es sich bei der mit Isocyanat reaktiven Komponente (b) um einen Ester, werden vorzugsweise ausschließlich Aminkatalysatoren eingesetzt.

Handelt es sich bei den Poyurethanen um thermoplastische Polyurethane, werden bevorzugt die oben genannten organischen Metallverbindungen mit der dort genannten Bevorzugung eingesetzt. Weiter bevorzugt werden bei thermoplastischen Polyurethanen bevorzugt eine organische Metallverbindung als Katalysator eingesetzt.

Weiter bevorzugte sind die Katalysatoren für thermoplastische Polyurethane ausgewählt aus der Gruppe Zinndioctoat, Wismutdecanoat und Titansäureester. Diese Katalysatoren haben den Vorteil, dass die Polyurethane, insbesondere auch nach Unterwassergranulierung, noch nachgereift werden können. Besonders bevorzugt ist Zinndioctoat.

Werden Katalysatoren (d) eingesetzt, werden diese bevorzugt in einer Konzentration von 0,001 Gew.-% bis 5 Gew.-%, insbesondere 0,05 Gew.-% bis 2 Gew.-% als Katalysator bzw. Katalysatorkombination, bezogen auf das Gewicht der Komponente (b) eingesetzt werden.

### Treibmittel (e)

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Polyurethane Handbook Hanser Publisher, Munich 2nd edition 1993, chapter 3.4.5" beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt.

Die speziellen Ausgangssubstanzen (a) bis (f) für die Herstellung von Polyurethanen unterscheiden sich jeweils quantitativ und qualitativ nur geringfügig wenn als Polyurethan ein erfindungsgemäßes thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Polyurethane Handbook Hanser Publisher, Munich 2nd edition 1993, chapter 6.1", die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch die Schwefel-Kohlenstoffverbindung (d) zugegeben.

### TPU

Erfindungsgemäß handelt es sich bei dem Polyurethan um ein thermoplastisches Polyurethan. Die Herstellung erfolgt durch Umsetzung von (a) Isocyanaten mit (b) gegenüber Isocyanaten reaktiven Verbindungen, auch als Polyol bezeichnet, mit einem zahlenmittleren Molekulargewicht von 0,5 × 10³ g /mol bis 100 × 10³ g /mol und in weiter bevorzugten Ausführungsformen mit (c) Kettenverlängerer mit einem Molekulargewicht von 0,05 × 10³ g /mol bis 0,499 × 10³ g /mol, in weiter bevorzugten Ausführungsformen in Gegenwart von (d) Katalysatoren und/oder (e) üblichen Hilfsstoffen und/oder Zusatzstoffen.

Zur Einstellung von Härte und Schmelzindex der TPU können die eingesetzten Mengen der Aufbaukomponenten (b) und (c) in ihren molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung der erfindungsgemäßen thermoplastischen Polyurethane werden bevorzugt im wesentlichen difunktionellen Polyole (b) auch als Polyhydroxylverbindungen (b) bezeichnet, die erfindungsgemäß die oben beschriebenen Polycarbonate sind, und die Kettenverlängerungsmittel (c) vorteilhafterweise in Molverhältnissen von 1:1 bis 1:5, vorzugsweise 1:1,5 bis 1:4,5 verwendet, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1 : 5,5 bis 1 : 15, vorzugsweise von 1 : 6 bis 1 : 12, liegen, so dass die erhaltenen Mischungen aus (b) und (c) ein Hydroxyläquivalentgewicht von 110 bis 200, vorzugsweise von 120 bis 180, aufweisen.

Zur Herstellung der erfindungsgemäßen TPU werden die Aufbaukomponenten (a), (b), in einer bevorzugten Ausführungsform auch (c), in Gegenwart eines Katalysators (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Komponenten (b) und (c) 0,95 :1 bis 1,10:1, vorzugsweise 0,98 :1 bis 1,02:1 und insbesondere 0.99 bis 1,00:1 beträgt.

Vorzugsweise werden erfindungsgemäß TPU hergestellt, bei denen das TPU ein gewichtsmittleres Molekulargewicht von 0,08 × 10⁶ g/mol bis 0,8 × 10⁶ g/mol aufweist, bevorzugt von 0,1 × 10⁶ g/mol bis 0,18 ×10⁶ g/mol. Die Obergrenze für das gewichtsmittlere Molekulargewicht der TPU wird in aller Regel durch die Verarbeitbarkeit wie auch das gewünschte Eigenschaftsspektrum bestimmt. Bei den vorstehend für das TPU wie auch für die Aufbaukomponenten (a) und (b) angegebenen mittleren Molekulargewichten handelt es sich um die mittels Gelpermeationschromatographie bestimmten Gewichtsmittel.

Als organische Isocyanate (a) werden auch für thermoplastische Polyurethane die oben beschriebenen Isocyanate eingesetzt.

Die gegenüber Isocyanat reaktive Verbindung (b) hat für thermoplastische Polyurethane im statistischen Mittel mindestens 1,8 und höchstens 3,0 zerewitinoffaktive Wasserstoffatome, diese Anzahl wird auch als Funktionalität der gegenüber Isocyanat reaktiven Verbindung (b) bezeichnet und gibt die aus einer Stoffmenge theoretisch auf ein Molekül heruntergerechnete Menge der mit Isocyanat reaktiven Gruppen des Moleküls an. Die Funktionalität ist bevorzugt zwischen 1,8 und 2,6, weiter bevorzugt zwischen 1,9 und 2,2 und insbesondere 2.

Die gegenüber Isocyanat reaktive Verbindung, erfindungsgemäß das Polyacarbonat, ist oben mit der entsprechenden Bevorzugung beschrieben.

Diese langkettigen Verbindungen werden mit einem Stoffmengenanteil von 1 Äquivalent-Mol% bis 80 Äquivalent-Mol%, bezogen auf den Isocyanatgruppengehalt des Polyisocyanats eingesetzt.

Als Kettenverlängerungsmittel (c) für TPU werden bevorzugt aliphatische, araliphatische, aromatische und/oder cycloaliphatische Verbindungen mit einem Molekulargewicht von 50 g/mol bis 499 g/mol eingesetzt, bevorzugt mit 2 mit Isocyanat reaktiven Verbindungen, die auch als funktionelle Gruppen bezeichnet werden. Bevorzugte Kettenverlängerer sind Diamine und/oder Alkandiole, weiter bevorzugt Alkandiole mit 2 bis 10 Kohlenstoff-Atomen, bevorzugt mit 3 bis 8 Kohlenstoffatomen im Alkylenrest, die weiter bevorzugt nur primäre Hydroxylgruppen haben.

Bevorzugt ist der Kettenverlängerer (c) für TPU mindestens ein Kettenverlängerer ausgewählt aus der Gruppe bestehend aus 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan, Neopentylglykol und Hydroquinone Bis (beta-hydroxyethyl) Ether (HQEE). Besonders geeignet sind Kettenverlängerer ausgewählt aus der Gruppe bestehend aus 1,2-Ethylenglycol, 1,3-Propandiol, 1,4-Butandiol und 1,6-Hexandiol.

Weiter bevorzugte Kettenverlängere sind 1,4-Butandiol, 1,6-Hexandiol und Ethandiol, insbesondere 1,4-Butandiol.

Auch für die thermoplastischen Polyurethane werden in bevorzugten Ausführungsformen die oben beschriebenen Katalysatoren, Hilfsmittel und Füllstoffe mit der dort beschriebene Bevorzugung und Menge eingesetzt.

### Herstellung-TPU

Die Herstellung der TPU kann nach den bekannten Verfahren diskontinuierlich oder kontinuierlich, beispielsweise mit Reaktionsextrudern oder dem Bandverfahren nach dem "one-shot-" oder dem Prepolymer-Verfahren, bevorzugt nach dem "one-shot"-Verfahren erfolgen. Bei dem "one-shot-"Verfahren werden die zur Reaktion kommenden Komponenten (a), (b), in bevorzugten Ausführungsformen auch die Komponenten (c), (d) und/oder (e) nacheinander oder gleichzeitig miteinander vermischt, wobei die Polymerisationsreaktion unmittelbar einsetzt. Beim Extruderverfahren werden die Aufbaukomponenten (a), (b) sowie in bevorzugten Ausführungsformen auch (c), (d) und/oder (e) einzeln oder als Gemisch in den Extruder eingeführt und, bevorzugt bei Temperaturen von 100°C bis 280oC, vorzugsweise 140°C bis 250°C, zur Reaktion gebracht. Das erhaltene Polyurethan wird extrudiert, abgekühlt und granuliert.

### Herstellung

Die Herstellung von Polyurethanen erfolgt üblicherweise über das Präpolymerverfahren bei dem das Isocyanat (a) mit der gegenüber Isocyanat reaktiven Verbindung (b) in äquimolarem Verhältnis hergestellt wird. Dieses Präpolymer wir in einem zweiten Schritt mit weiterem Polyol (b), ggf. Kettenverlängerer (c) und ggf. auch weiteren Einsatzstoffen (d) und oder (e) zu dem Polyurethan reagiert:
Thermoplastisches Polyurethan wird in einem bevorzugten Verfahren in einem Schritt aus den Aufbaukomponenten Isocyanat (a), der gegenüber Isocyanat reaktiven Verbindung (b) Kettenverlänger (c) sowie in bevorzugten Ausführungsformen die weiteren Einsatzstoffe (d) und/oder (e) hergestellt.

Bevorzugt wird ein Zweiwellenextruder verwendet, da der Zweiwellenextruder zwangsfördernd arbeitet und so eine präzisere Einstellung der Temperatur und Ausstoßmenge auf dem Extruder möglich ist.

In einem anderen bevorzugten Verfahren wird auch thermoplastisches Polyurethan mit dem oben beschrieben Präpolymerverfahren hergestellt.

Die oben beschriebene thermoplastische Polyurethanen werden zu Granulat oder Pulver verarbeitet, das bevorzugt für die Herstellung von Spritzguss- Kalandrier- Pulversinter- oder Extrusionsartikel verwendet wird.

Insbesondere wird thermoplastiches Polyurethan in einem Härtebereich von 30- Shore A-80 Shore D eingesetzt. Vorzugsweise weist im Rahmen der vorliegenden Erfindung eine glasfaserverstärktes thermoplastisches Polyurethan eine Härte im Bereich von 30- Shore A-80 Shore D auf.

Bevorzugte thermoplastische Polyurethane haben ein E-Modul, gemessen nach EN ISO 527-1 von 50 MPa bis 20 000 MPa, bevorzugt 500 MPa bis 18 000 MPa, besonders bevorzugt 10 000 MPa bis 15 000 MPa.

Bevorzugt werden Materialien verwendet, die eine einfache Verarbeitung zum Beispiel im Spritzguss ermöglichen. Dabei ist es wichtig, dass diese Materialien eine genaue Abbildung der Oberflächentexturen der entsprechenden Spritzgussform zulassen.

In einzelnen Ausführungsformen ist es vorteilhaft, dass die Polyurethane eine gute Haftung auf anderen Kunststoffen, bevorzugt Polyamid und ABS besitzen.

Weiterhin ist es vorteilhaft, wenn das Überspritzen in geringen Dicken möglich ist.

Daher wird bevorzugt thermoplastisches Polyurethan für die Gegenstände, insbesondere Hüllen verwendet. Es gibt sehr verschiedene TPU Typen, unter anderem aliphatische TPU mit hoher Lichtechtheit und auch transparente TPU.

Besonders begehrt sind Oberflächen mit einem sogenannten "Soft Touch", ohne jedoch klebrig zu wirken. Dieser "Soft Touch" wird häufig durch Oberflächentexturen erzeugt, die bevorzugte Ausführungsformen sind.

Verwendung:
Das thermoplastische Polyurethan wird für einen Gegenstand verwendet, der Bestandteil eines Gerätes ist, das elektromagnetische Strahlen senden oder empfängt oder dieses Gerät zumindest teilweise umhüllt oder in der Nähe des Gerätes verwendet wird, wobei die Frequenz der elektromagnetischen Strahlen zwischen10⁴ Hz und 10¹³ Hz liegt, bevorzugt zwischen 10⁵ Hz und 10¹¹ Hz und besonders bevorzugt zwischen 0,5 × 10⁹ Hz und 3,0 × 10⁹ Hz und ganz besonders bevorzugt etwa 2 GHz.

Bevorzugt sind die Geräte ausgewählt aus der Gruppe Radios, Funkgeräte, Fernseher, Fernsteuerungen, Impulsschalter, kabellose Telefone, Computer und Tablets. Ein bevorzugter Gegenstand ist der Rahmen eines der oben genannten Geräte oder eine Hülle für eines dieser Geräte. Weiter bevorzugt handelt es ich dabei um den Rahmen oder eine Hülle für ein kabellosen Telefon, einen Computers oder ein Tablett.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Beispiel 1 - Herstellung der Polymere im Handgussverfahren

Die Polyole wurden bei 80 °C in einem Behälter vorgelegt und mit den Komponenten gemäß den folgenden TPU Rezepturen bei einer Ansatzgröße von 2kg unter starkem Rühren vermischt. Die Reaktionsmischung erhitzte sich auf über 110 °C und wurde dann auf einen beheizten, teflonbeschichteten Tisch ausgegossen. Die erhaltene Gießschwarte wurde 15 Stunden bei 80 °C getempert, anschließend zerkleinert und zu Spritzplatten mit einer Dicke von 2 mm spritzgegossen. Die Spritzgußtemperaturen variierten dabei im Bereich von 180°C-220°C in Abhängigkeit der jeweiligen Schmelzeviskosität.

### 2. Beispiel 2 - für die Vergleichsbeispiele verwendete Materialien

- TPU 1:: TPU der Shore Härte 85A der BASF Polyurethanes GmbH, Elastogranstrasse 60, 49448 Lemförde, basiert auf Polytetrahydrofuran (PTHF) mit einem Molekulargewicht (Mn) von 1000 Dalton, 1,4-Butandiol, MDI.
- TPU 2:: TPU der Shore Härte 90A der BASF Polyurethanes GmbH, Elastogranstrasse 60, 49448 Lemförde, basiert auf Polytetrahydrofuran (PTHF) mit einem Molekulargewicht (Mn) von 1000 Dalton, 1,4-Butandiol, MDI.
- TPU 3:: TPU der Shore Härte 85A der BASF Polyurethanes GmbH, Elastogranstrasse 60, 49448 Lemförde, basiert auf Polytetrahydrofuran (PTHF) mit einem Molekulargewicht (Mn) von 1000 Dalton, 1,2-Ethylenglycol, HDI.
- TPU 4:: TPU der Shore Härte 90A der BASF Polyurethanes GmbH, Elastogranstrasse 60, 49448 Lemförde, basiert auf einem Adipinsäureester mit einem Molekulargewicht (Mn) von 800 Dalton, 1,4-Butandiol, MDI.
- TPU 5:: TPU der Shore Härte 85A der BASF Polyurethanes GmbH, Elastogranstrasse 60, 49448 Lemförde, basiert auf einem Adipinsäureester mit einem Molekulargewicht (Mn) von 1000 Dalton, 1,4-Butandiol, MDI.
- TPU 6:: TPU der Shore Härte 85A der BASF Polyurethanes GmbH, Elastogranstrasse 60, 49448 Lemförde, basiert auf einem Adipinsäureester mit einem Molekulargewicht (Mn) von 2400 Dalton, 1,4-Butandiol, MDI.
- TPU 7:: TPU der Shore Härte 95A der BASF Polyurethanes GmbH, Elastogranstrasse 60, 49448 Lemförde, basiert auf einem Adipinsäureester mit einem Molekulargewicht (Mn) von 2400 Dalton, 1,4-Butandiol, MDI.
- TPU 8:: TPU der Shore Härte 85A der BASF Polyurethanes GmbH, Elastogranstrasse 60, 49448 Lemförde, basiert auf einem Adipinsäureester mit einem Molekulargewicht (Mn) von 2000 Dalton, 1,4-Butandiol, HDI.
- TPU 9:: TPU der Shore Härte 85A der BASF Polyurethanes GmbH, Elastogranstrasse 60, 49448 Lemförde, basiert auf Ultradur B4500, einem Adipinsäureester mit einem Molekulargewicht (Mn) von 2000 Dalton, 1,4-Butandiol, HDI. Hergestellt nach dem Verfahren beschrieben in der EP01419188B1.
- TPU 10:: TPU der Shore Härte 85A der BASF Polyurethanes GmbH, Elastogranstrasse 60, 49448 Lemförde, basiert auf Capromer PD 1-20 (Polycaprolacton) mit einem Molekulargewicht (Mn) von 2000 Dalton, 1,4-Butandiol, MDI.
- TPU 11:: TPU der Shore Härte 85A der BASF Polyurethanes GmbH, Elastogranstrasse 60, 49448 Lemförde, basiert auf Capromer PD 1-20 (Polycaprolacton) mit einem Molekulargewicht (Mn) von 2000 Dalton, 1,4-Butandiol, H12MDI.

### 3. Beispiel 3 - erfindungsgemäße Beispiele

- TPU 12:: TPU der Shore Härte 95A der BASF Polyurethanes GmbH, Elastogranstrasse 60, 49448 Lemförde, basiert auf Ultradur B4500, einem Polycarbonatdiol der Firma Ube (Eternacoll PH-200D), 1,4-Butandiol, HDI. Hergestellt nach dem Verfahren beschrieben in der EP01419188B1.
- TPU 13:: TPU der Shore Härte 80A der BASF Polyurethanes GmbH, Elastogranstrasse 60, 49448 Lemförde, basiert auf einem Polycarbonatdiol der Firma Ube (Eternacoll PH-200D), 1,4-Butandiol, HDI.
- TPU 14:: TPU der Shore Härte 80A der BASF Polyurethanes GmbH, Elastogranstrasse 60, 49448 Lemförde, basiert auf einem Polycarbonatdiol der Firma Bayer (Desmophen 2200), 1,4-Butandiol, MDI.
- TPU 15:: TPU der Shore Härte 80A der BASF Polyurethanes GmbH, Elastogranstrasse 60, 49448 Lemförde, basiert auf einem Polycarbonatdiol der Firma Ube (Eternacoll PH-200D), 1,4-Butandiol, MDI.
- TPU 16:: TPU der Shore Härte 90A der BASF Polyurethanes GmbH, Elastogranstrasse 60, 49448 Lemförde, basiert auf einem Polycarbonatdiol der Firma Ube (Eternacoll PH-200D), 1,4-Butandiol, MDI.
- TPU 17:: TPU der Shore Härte 55D der BASF Polyurethanes GmbH, Elastogranstrasse 60, 49448 Lemförde, basiert auf einem Polycarbonatdiol der Firma Ube (Eternacoll PH-200D), 1,4-Butandiol, MDI.
- TPU 18:: TPU der Shore Härte 62D der BASF Polyurethanes GmbH, Elastogranstrasse 60, 49448 Lemförde, basiert auf einem Polycarbonatdiol der Firma Ube (Eternacoll PH-200D), 1,4-Butandiol, MDI.
- TPU 19:: TPU der Shore Härte 90A der BASF Polyurethanes GmbH, Elastogranstrasse 60, 49448 Lemförde, basiert auf einem Polycarbonatdiol der Firma Ube (Eternacoll PH-200D), 1,4-Butandiol, H12MDI.

### 4. Beispiel 4 -

Das Granulat der oben genannten Materialien wurde aufgeschmolzen und ca. 2 mm dicke Folien hergestellt mit denen der dielektrischen Verlustfaktors bestimmt wird. Ein kleiner dielektrischer Verlustfaktor bedeutet ein geringe Abschwächung der eingestrahlten Signalstärke.

Es wurden nach einer Konditionierung von 14 Tagen im Normklima (23°C, 50% Luftfeuchte) jeweils 2 Proben nach IEC 60250 im Normklima (23°C, 50% Luftfeuchte) gemessen. Die Probendicke betrug 2,0 mm.

Die Mittelwerte der Messungen sind in den folgenden Tabellen aufgeführt.

**Tabelle 1- Vergleichsbeispiele**

| Probenbezeichnung | Frequenz/ [MHz] | Dielektrizitäts-Zahl/ (εr) | dielektrischer Verlustfaktor (tan δ) |
|---|---|---|---|
| TPU 1 | 500 | 3,7 | 0,098 |
| TPU 2 | 500 | 3,7 | 0,092 |
| TPU 3 | 500 | 4,2 | 0,148 |
| TPU 4 | 500 | 3,7 | 0,072 |
| TPU 5 | 500 | 3,9 | 0,089 |
| TPU 6 | 500 | 4,2 | 0,115 |
| TPU 7 | 500 | 3,7 | 0,076 |
| TPU 8 | 500 | 4,3 | 0,146 |
| TPU 9 | 500 | 3,9 | 0,102 |
| TPU 10 | 500 | 3,7 | 0,086 |
| TPU 11 | 500 | 3,4 | 0,069 |

**Tabelle 2 - erfindungsgemäße Beispiele**

| Probenbezeichnung | Frequenz [MHz] | Dielektrizitätszahl (εᵣ) | dielektrischer Verlustfaktor (tan δ) |
|---|---|---|---|
| TPU 12 | 400 | 2,9 | 0,017 |
| TPU 13 | 400 | 2,8 | 0,036 |
| TPU 14 | 400 | 2,9 | 0,023 |
| TPU 15 | 400 | 2,9 | 0,022 |
| TPU 16 | 400 | 2,9 | 0,018 |
| TPU 16 | 500 | 2,9 | 0,015 |
| TPU 17 | 400 | 2,9 | 0,016 |
| TPU 18 | 400 | 2,9 | 0,015 |
| TPU 19 | 400 | 2,8 | 0,019 |

Es wird gezeigt, dass der dielektrische Verlustfaktor bei den Polyurethanen Die, die auf Polycarbonat basieren deutlich geringer ist als bei den Typen ohne Polycarbonatdiol.

### Zitierte Literatur

Kunststoffhandbuch, Band 7, Polyurethane", Carl Hanser Verlag, 3. Auflage 1993, Kapitel 5
Kunststoffhandbuch, Band 7, Polyurethane", Carl Hanser Verlag, 3. Auflage 1993, Kapitel 6
Polyurethane Handbook Hanser Publisher, München, 1993, Kapitel 3.2 und Kapitel 3.4 und Kapitel 6.1
Kunststoffhandbuch, 7, Polyurethane", Carl Hanser-Verlag, 3. Auflage 1993, Kapitel 3.1
Glass Fibers, Frederick T. Wallenberger, James C. Watson, and Hong Li, PPG Industries, Inc.; ASM Handbook, Vol. 21: Composites
Plastics Additives Handbook, 5. Auflage, H. Zweifel, ed., Hanser Publishers, München, 2001, S. 98-136
EP 0989146 A1
EP 1460094 A1
PCT/EP2005/010124
EP 1529792 A1

## Patentansprüche

1. Gegenstand aus einem thermoplastischen Polyurethan, der ein Bestandteil eines Gerätes ist oder der eine Hülle für ein Gerät ist, oder der in der Nähe eines Gerätes verwendet wird, wobei das Gerät elektromagnetische Strahlen empfängt oder sendet, und das thermoplastische Polyurethan hergestellt ist aus zumindest einem Diisocyanat und mindestens einer mit Isocyanat reaktiven Substanz mit einem zahlenmittleren Molekulargewicht von mehr als 0,500 × 10³ g/mol, **dadurch gekennzeichnet, dass** die mit Isocyanat reaktive Substanz mindestens ein Polycarbonat mit mindestens zwei Hydroxylgruppen enthält,
und gekennzeichnet, dass die Frequenz der elektromagnetischen Strahlen zwischen10⁴ Hz und 10¹³ Hz liegt, bevorzugt zwischen 10⁵ Hz und 10¹¹ Hz und besonders bevorzugt zwischen 0,5 × 10⁹ Hz und 3,0 × 10⁹ Hz.

2. Gegenstand nach Anspruch 1, **dadurch gekennzeichnet, dass** das Polycarbonat ein aliphatisches Polycarbonat ist.

3. Gegenstand nach einem der Ansprüche 1 oder 2, **dadurch gekennzeichnet, dass** das Polycarbonat auf Diolen basiert, die ausgewählt sind aus der Gruppe bestehend aus Butandiol, Pentandiol und Hexandiol.

4. Gegenstand nach einem der Ansprüche 1 bis 3, **dadurch gekennzeichnet, dass** das Diisocyanat ausgewählt ist aus der Gruppe bestehend aus 4,4'-, 2,4'- und 2,2'-Dicyclohexylmethan-diisocyanat (H12 MDI), 1,6-Hexamethylen-diisocyanat (HDI),1,4-Cyclohexan-diisocyanat, 1-Methyl-2,4- und/oder -2,6-cyclohexan-diisocyanat, 2,2'-, 2,4'- und/oder 4,4'-Diphenylmethandiisocyanat (MDI), 2,4- und/oder 2,6-Toluylendiisocyanat (TDI).

5. Gegenstand nach einem der Ansprüche 1 bis 4, **dadurch gekennzeichnet, dass** das Diisocyanat ausgewählt ist aus der Gruppe bestehend aus 1,6-Hexamethylen-diisocyanat (HDI) und 2,2'-, 2,4'- und/oder 4,4'-Diphenylmethandiisocyanat (MDI).

6. Gegenstand nach Anspruch 1, **dadurch gekennzeichnet, dass** für die Herstellung des thermoplastischen Polyurethans weiterhin eine gegenüber Isocyanaten reaktive Gruppen aufweisende aliphatische, araliphatische, aromatische oder cycloaliphatische Verbindung mit einem Molekulargewicht zwischen 0,05 g/mol und 0,499 g/mol als Kettenverlängerer verwendet wird, wobei der Kettenverlängerer bevorzugt nur primäre Hydroxylguppen besitzt.

7. Gegenstand nach Anspruch 6, **dadurch gekennzeichnet, dass** bei der Herstellung des thermoplastischen Polyurethans eine organische Metallverbindung als Katalysator eingesetzt wird.

8. Gegenstand nach einem der Ansprüche 1 bis 7, **dadurch gekennzeichnet, dass** der Gegenstand ein Rahmen oder eine Schutzhülle für das Gerät ist.

9. Gegenstand nach einem der Ansprüche 1 bis 8, **dadurch gekennzeichnet, dass** in dem Polyurethan anorganische faserförmige Füllstoffe enthalten sind.

10. Gegenstand nach Anspruch 9, **dadurch gekennzeichnet, dass** die anorganische Fasern beschichtete Glasfasern sind, die weiter bevorzugt aus E-Glas bestehen, weiter bevorzugt eine Stärke von 3 µm bis 30 µm, insbesondere 8 µm bis 15 µm haben, sowie weiter bevorzugt mit einem Maximum der Faserlängenverteilung im Bereich von 0,03 mm bis etwa 15 mm, insbesondere von 1 mm bis 10 mm.

11. Verwendung von einem thermoplastischen Polyurethan, für einen Gegenstand nach einem der Ansprüche 1 bis 10.

12. Verwendung eines thermoplastischen Polyurethans zur Herstellung eines Gegenstand, der ein Bestandteil eines Gerätes ist oder der eine Hülle für ein Gerät ist, oder der in der Nähe eines Gerätes verwendet wird, wobei das Gerät elektromagnetische Strahlen empfängt oder sendet, und wobei das thermoplastische Polyurethan hergestellt ist aus zumindest einem Diisocyanat und mindestens einer mit Isocyanat reaktiven Substanz mit einem zahlenmittleren Molekulargewicht von mehr als 0,500 × 10³ g/mol, **dadurch gekennzeichnet, dass** die mit Isocyanat reaktive Substanz mindestens ein Polycarbonat mit mindestens zwei Hydroxylgruppen enthält,
wobei die Frequenz der elektromagnetischen Strahlen zwischen 10⁴ Hz und 10¹³ Hz liegt, bevorzugt zwischen 10⁵ Hz und 10¹¹ Hz und besonders bevorzugt zwischen 0,5 × 10⁹ Hz und 3,0 × 10⁹ Hz.

## Claims

1. An article made of a thermoplastic polyurethane which is a constituent of a device or a cover for a device or which is used in proximity to a device, where the device receives or transmits electromagnetic radiation and the thermoplastic polyurethane is produced from at least one diisocyanate and at least one isocyanate-reactive substance having a number-average molecular weight of more than 0.500 × 10³ g/mol, wherein the isocyanate-reactive substance comprises at least one polycarbonate having at least two hydroxyl groups,
and the frequency of the electromagnetic radiation is between 10⁴ Hz and 10¹³ Hz, preferably between 10⁵ Hz and 10¹¹ Hz and particularly preferably between 0.5 × 10⁹ Hz and 3.0 × 10⁹ Hz.

2. The article according to claim 1, wherein the polycarbonate is an aliphatic polycarbonate.

3. The article according to either of claims 1 and 2, wherein the polycarbonate is based on diols selected from the group consisting of butanediol, pentanediol and hexanediol.

4. The article according to any of claims 1 to 3, wherein the diisocyanate is selected from the group consisting of 4,4'-, 2,4'- and 2,2'-dicyclohexylmethane diisocyanate (H12 MDI), 1, 6-hexamethylene diisocyanate (HDI), 1,4-cyclohexane diisocyanate, 1-methyl-2,4- and/or -2,6-cyclohexane diisocyanate, 2,2'-, 2,4'- and/or 4,4'-diphenylmethane diisocyanate (MDI), 2,4- and/or 2,6-tolylene diisocyanate (TDI).

5. The article according to any of claims 1 to 4, wherein the diisocyanate is selected from the group consisting of 1,6-hexamethylene diisocyanate (HDI) and 2,2'-, 2,4'- and/or 4,4'-diphenylmethane diisocyanate (MDI) .

6. The article according to claim 1, wherein production of the thermoplastic polyurethane further employs an aliphatic, araliphatic, aromatic or cycloaliphatic compound having isocyanate-reactive groups and a molecular weight between 0.05 g/mol and 0.499 g/mol as a chain extender, wherein the chain extender preferably has only primary hydroxyl groups.

7. The article according to claim 6, wherein production of the thermoplastic polyurethane employs an organic metal compound as the catalyst.

8. The article according to any of claims 1 to 7, wherein the article is a frame or a protective cover for the device.

9. The article according to any of claims 1 to 8, wherein the polyurethane contains inorganic fibrous fillers.

10. The article according to claim 9, wherein the inorganic fibers are coated glass fibers which are more preferably made of E-glass, more preferably have a thickness of 3 µm to 30 µm, in particular 8 µm to 15 µm, and more preferably have a maximum fiber length distribution in the range from 0.03 mm to about 15 mm, in particular from 1 mm to 10 mm.

11. The use of a thermoplastic polyurethane for an article according to any of claims 1 to 10.

12. The use of a thermoplastic polyurethane for producing an article which is a constituent of a device or a cover for a device or which is used in proximity to a device, where the device receives or transmits electromagnetic radiation and where the thermoplastic polyurethane is produced from at least one diisocyanate and at least one isocyanate-reactive substance having a number-average molecular weight of more than 0.500 ×10³ g/mol, wherein the isocyanate-reactive substance comprises at least one polycarbonate having at least two hydroxyl groups,
where the frequency of the electromagnetic radiation is between 10⁴ Hz and 10¹³ Hz, preferably between 10⁵ Hz and 10¹¹ Hz and particularly preferably between 0.5 × 10⁹ Hz and 3.0 × 10⁹ Hz.

## Revendications

1. Objet en polyuréthane thermoplastique qui est un composant d'un appareil ou qui est une enveloppe destinée à un appareil, ou qui est utilisé à proximité d'un appareil, l'appareil recevant ou émettant un rayonnement électromagnétique, et le polyuréthane thermoplastique étant produit à partir d'au moins un diisocyanate et d'au moins une substance réactive aux isocyanates et ayant un poids moléculaire moyen en nombre supérieur à 0,500 × 10³ g/mol, **caractérisé en ce que** la substance réactive aux isocyanates contient au moins un polycarbonate comportant au moins deux groupes hydroxyle, et **en ce que** la fréquence du rayonnement électromagnétique est comprise entre 10⁴ Hz et 10¹³ Hz, de préférence entre 10⁵ Hz et 10¹¹ Hz et de manière particulièrement préférée entre 0,5 × 10⁹ Hz et 3,0 × 10⁹ Hz.

2. Objet selon la revendication 1, **caractérisé en ce que** le polycarbonate est un polycarbonate aliphatique.

3. Objet selon l'une des revendications 1 et 2, **caractérisé en ce que** le polycarbonate est à base de diols choisis dans le groupe comprenant le butanediol, le pentanediol et l'hexanediol.

4. Objet selon l'une des revendications 1 à 3, **caractérisé en ce que** le diisocyanate est choisi dans le groupe comprenant le diisocyanate de 4,4'-, 2,4'- et 2,2'-dicyclohexylméthane (H12 MDI), le diisocyanate de 1,6-hexaméthylène (HDI), le diisocyanate de 1,4-cyclohexane, le diisocyanate de 1-méthyl-2,4- et/ou 2,6-cyclohexane, le diisocyanate 2,2'-, 2,4'- et/ou 4,4'-diphénylméthane (MDI), le diisocyanate de 2,4- et/ou 2,6-tolylène (TDI).

5. Objet selon l'une des revendications 1 à 4, **caractérisé en ce que** le diisocyanate est choisi dans le groupe comprenant le diisocyanate de 1,6-hexaméthylène (HDI) et le diisocyanate de 2,2'-, 2,4'- et/ou 4,4'-diphénylméthane (MDI).

6. Objet selon la revendication 1, **caractérisé en ce qu'**un composé aliphatique, araliphatique, aromatique ou cycloaliphatique comportant des groupements réactifs aux isocyanates et ayant un poids moléculaire compris entre 0,05 g/mol et 0,499 g/mol est utilisé comme prolongateur de chaîne dans la production du polyuréthanne thermoplastique, le prolongateur de chaîne ne possédant de préférence que des groupes hydroxyle primaires.

7. Objet selon la revendication 6, **caractérisé en ce qu'**un composé métallique organique est utilisé comme catalyseur dans la production du polyuréthane thermoplastique.

8. Objet selon l'une des revendications 1 à 7, **caractérisé en ce que** l'objet est un cadre ou une enveloppe de protection de l'appareil.

9. Objet selon l'une des revendications 1 à 8, **caractérisé en ce que** des charges fibreuses minérales sont contenues dans le polyuréthane.

10. Objet selon la revendication 9, **caractérisé en ce que** les fibres minérales sont des fibres de verre pourvues d'un revêtement, qui sont plus préférablement en verre E, qui ont plus préférablement une épaisseur de 3 µm à 30 µm, notamment de 8 µm à 15 µm, et qui présentent plus préférablement un maximum de distribution de longueur de fibres dans la gamme allant de 0,03 mm à environ 15 mm, en particulier de 1 mm à 10 mm.

11. Utilisation d'un polyuréthane thermoplastique pour un objet selon l'une des revendications 1 à 10.

12. Utilisation d'un polyuréthane thermoplastique pour la production d'un objet qui est un composant d'un appareil ou qui est une enveloppe destinée à un appareil, ou qui est utilisé à proximité d'un appareil, l'appareil recevant ou émettant un rayonnement électromagnétique, et le polyuréthane thermoplastique étant produit à partir d'au moins un diisocyanate et d'au moins une substance réactive aux isocyanates et ayant un poids moléculaire moyen en nombre supérieur à 0,500 × 10³ g/mol, **caractérisé en ce que** la substance réactive aux isocyanates contient au moins un polycarbonate comportant au moins deux groupes hydroxyle,
la fréquence du rayonnement électromagnétique étant comprise entre 10⁴ Hz et 10¹³ Hz, de préférence entre 10⁵ Hz et 10¹¹ Hz et de manière particulièrement préférée entre 0,5 × 10⁹ Hz et 3,0 × 10⁹ Hz.
